# EUROPEAN PATENT APPLICATION

(11) **EP 4 848 063 A1**
(43) Date of publication of application: **02.12.2026**
(21) Application number: 26180630.1
(22) Date of filing: 22.05.2026
(51) Int. Cl.: G06F 3/12, H04N 1/00

(54) **CLIENT DEVICE AND CONTROL METHOD THEREFOR**

(30) Priority: 30.05.2025 JP 2025091191
(71) Applicant: Canon Kabushiki Kaisha, Tokyo 146-8501 (JP)
(72) Inventor: DOBASHI, Nao, Tokyo, 146-8501 (JP)
(74) Representative: Canon Europe Limited

(57) **Abstract**

A client device 101 includes connecting means for connecting to an operating system (OS) environment provided by a server 103, detecting means for detecting that an image forming apparatus has been connected to a communication port for direct communication of the client device, and processing means for, in response to an image forming apparatus 102 being connected to the communication port while the client device is connected to the OS environment, performing processing for making the image forming apparatus usable in the OS environment.

## Description

### TECHNICAL FIELD

The present disclosure relates to a client device and a control method therefor.

### BACKGROUND

In recent years, Desktop as a Service (DaaS) which provides a desktop environment on a cloud service has been provided by IT vendors. In addition, there is a mechanism for redirecting (transferring) a printer queue installed on a client-side computer to a cloud server. A user can transmit a print job to a printer connected to the client-side computer from a UI of the cloud server via the client-side computer. Japanese Patent Laid-Open Publication No. 2016-162446 describes a technique for automatically registering an extension function in a server when the function of an image forming apparatus is extended.

### SUMMARY

Until a print queue of an image forming apparatus connected to a client device is redirected to a server device, the user cannot use the image forming apparatus from the server device, which reduces convenience. Some aspects of the present disclosure provide a technique for improving convenience for a user who uses a printer queue redirected to a server device.

The present disclosure in its first aspect provides a client device as specified in claim 1. The present disclosure in its second aspect provides a method as specified in claim 5. The present disclosure in its third aspect provides a computer program as specified in claim 6. Optional features for the first aspect, second aspect and third aspect are specified in or derivable from claim 2 to 4.

Features of the present disclosure will become apparent from the following description of embodiments with reference to the attached drawings. The following description of embodiments is described by way of example.

### BRIEF DESCRIPTION OF THE DRAWINGS

FIG. 1 is a block diagram explaining a configuration example of a printing system of a first embodiment.
FIGS. 2A to 2C are block diagrams explaining hardware configuration examples of each device of the first embodiment.
FIG. 3A is a block diagram explaining a software configuration example of the client device of the first embodiment.
FIG. 3B is a block diagram explaining a software configuration example of the server device of the first embodiment.
FIG. 4 is a schematic diagram explaining a screen example of the first embodiment.
FIG. 5 is a schematic diagram explaining a screen example of the first embodiment.
FIG. 6 is a schematic diagram explaining a screen example of the first embodiment.
FIG. 7 is a schematic diagram explaining a screen example of the first embodiment.
FIG. 8 is a sequence diagram explaining an operation example of the printing system of the first embodiment.
FIG. 9 is a sequence diagram explaining an operation example of the printing system of the first embodiment.
FIG. 10 is a sequence diagram explaining an operation example of the printing system of a second embodiment.
FIG. 11 is a schematic diagram explaining a screen example of the second embodiment.
FIG. 12 is a schematic diagram explaining a screen example of the second embodiment.
FIG. 13 is a sequence diagram explaining an operation example of the printing system of a third embodiment.
FIG. 14 is a schematic diagram explaining a screen example of the third embodiment.
FIG. 15 is a sequence diagram explaining an operation example of the printing system of a fourth embodiment.
FIG. 16 is a block diagram explaining a configuration example of a printing system of a fifth embodiment.
FIG. 17 is a schematic diagram explaining a screen example of the fifth embodiment.
FIG. 18 is a sequence diagram explaining an operation example of the printing system of the fifth embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and one or multiple such features may be combined as appropriate. Each of the embodiments in the present disclosure can be implemented solely or as a combination of a plurality of the embodiments or features thereof where necessary or where the combination of elements or features from individual embodiments in a single embodiment is beneficial. Furthermore, in the attached drawings, the same reference numerals are given to the same or similar configurations, and redundant description thereof is omitted.

### <First Embodiment>

### System Configuration

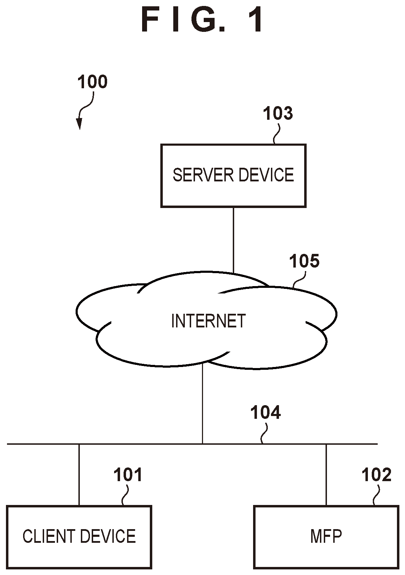

A configuration example of a printing system 100 according to a first embodiment will be described with reference to FIG. 1. The printing system 100 includes a client device 101, a Multi Functional Printer (MFP) 102, and a server device 103. In FIG. 1, only one client device 101, one MFP 102, and one server device 103 are shown respectively, but the printing system 100 may include a plurality of client devices, a plurality of MFPs, and/or a plurality of server devices.

The client device 101 is a computer that operates as a client using services provided by the server device 103. The client device 101 is, for example, a desktop or laptop personal computer, a tablet terminal, or a smartphone. The server device 103 is a computer that operates as a server providing services to clients. The server device 103 may be realized in a cloud environment managed by a business operator providing cloud services. In this case, the server device 103 may be called a cloud server device or a cloud server. Alternatively, the server device 103 may be realized in an on-premise environment.

The server device 103 provides a service providing an operating system (OS) environment. The client device 101 can remotely connect to the OS environment provided by the server device 103. A user of the client device 101 can use this OS environment on the client device 101. The OS environment is an environment configured by an OS and applications installed in the OS. As an example of a service providing an OS environment, there is Windows 365 (registered trademark) provided by Microsoft (registered trademark) Corporation. In Windows 365, a Windows (registered trademark) environment is provided to the client. The OS environment provided by the server device 103 is not limited to Windows, and may be any OS such as macOS (registered trademark), iOS (registered trademark), Android (registered trademark), or UNIX (registered trademark), for example. Further, the OS operating on the client device 101 and the OS provided by the server device 103 may be the same or different from each other. In the following description, the OS environment provided by the server device 103 is expressed as a server OS environment.

The client device 101 and the MFP 102 are arranged, for example, in the same office. In the example of FIG. 1, the MFP 102 is connected to the same network 104 (for example, a LAN (Local Area Network)) as the client device 101. The network 104 may be a network constructed only within a company. The network 104 may be a wired network or a wireless network. The network 104 is connected to the Internet 105 via a router (not shown). The client device 101 can communicate with the MFP 102 through the network 104. Instead of being connected to the network 104, the MFP 102 may be directly connected to the client device 101 (for example, through a Universal Serial Bus (USB) cable). In this case, the client device 101 can communicate with the MFP 102 through the USB connection.

The server device 103 is connected to the Internet 105. The client device 101 can communicate with the server device 103 through the network 104 and the Internet 105. Also, the MFP 102 can communicate with the server device 103 through the network 104 and the Internet 105.

### Hardware Configuration

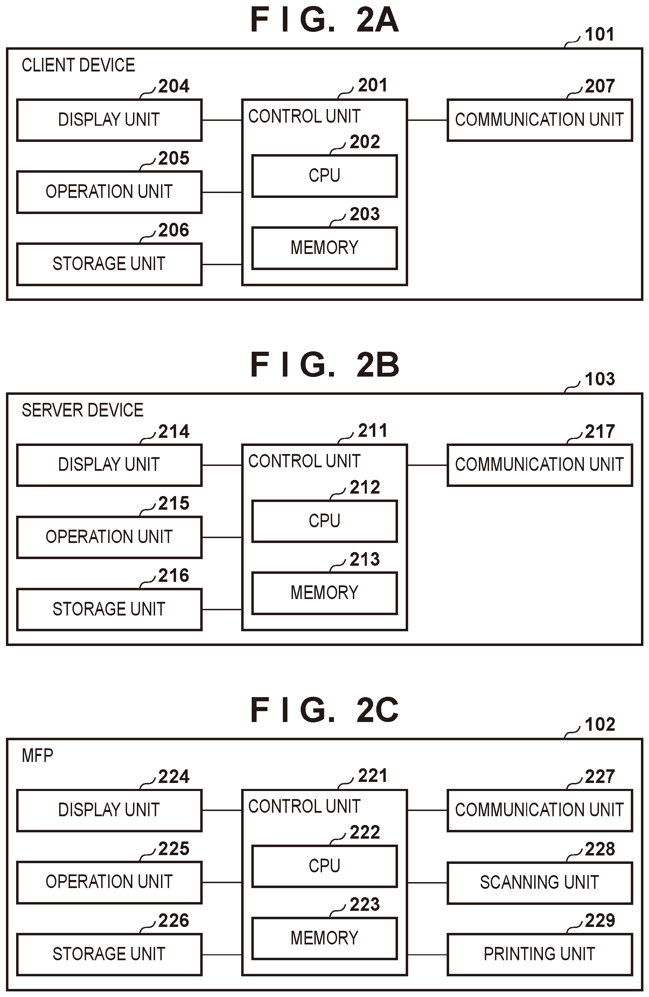

A hardware configuration example of the client device 101 will be described with reference to FIG. 2A. The client device 101 includes a control unit 201, a display unit 204, an operation unit 205, a storage unit 206, and a communication unit 207. These components can communicate with each other through a bus (not shown). The control unit 201 includes a Central Processing Unit (CPU) 202 and a memory 203.

The control unit 201 controls the entire client device 101. The display unit 204 displays information (for example, images, text, etc.) directed to the user. The display unit 204 is configured by a display such as a liquid crystal panel, for example. The operation unit 205 acquires input from the user. The operation unit 205 is configured by, for example, a mouse, a keyboard, or the like.

The storage unit 206 stores programs (software) and data used by the client device 101. The storage unit 206 is configured by a storage medium such as a Hard Disk Drive (HDD) or a Solid State Drive (SSD), for example. Programs stored in the storage unit 206 are read into the memory 203 and executed by the CPU 202. The programs include a program for causing the CPU 202 to execute each unit and each function of the client device 101. The program executed by the CPU 202 may be acquired from the server device 103 or another device.

The communication unit 207 communicates with an external device (for example, transmits and receives data). The communication unit 207 has a communication port which is a connection port for connecting a communication cable. The communication unit 207 may include a communication port (for example, a LAN port) for connecting to network equipment (for example, a router or a switch). Connection with network equipment is sometimes called a network connection. The communication unit 207 may include a communication port (for example, a USB port) for direct connection with peripheral equipment (for example, an MFP, a camera, a speaker). Connection through a USB cable is sometimes called a USB connection. Direct connection with peripheral equipment is not limited to connection via a USB cable, and may be performed via, for example, a serial cable, a FireWire cable, a serial cable, or the like. Direct connection between peripheral equipment and the client device 101 is not limited to a form in which these devices are connected with a cable (for example, a USB cable), and may be a form in which they are connected wirelessly, such as Bluetooth (registered trademark), for example.

The communication unit 207 includes a port control management system for monitoring the status of the communication port. By monitoring the status of the communication port, the communication unit 207 can detect that an external device has been connected to the client device 101 through the communication port.

A hardware configuration example of the server device 103 will be described with reference to FIG. 2B. The server device 103 includes a control unit 211, a display unit 214, an operation unit 215, a storage unit 216, and a communication unit 217. The control unit 211 includes a CPU 212 and a memory 213. Description of the components of the server device 103 is omitted as it is similar to the above description of the components of the client device 101.

A hardware configuration example of the MFP 102 will be described with reference to FIG. 2C. The MFP 102 includes a control unit 221, a display unit 224, an operation unit 225, a storage unit 226, and a communication unit 227. The control unit 221 includes a CPU 222 and a memory 223. Description of some components of the MFP 102 is omitted as it is similar to the above description of the components of the client device 101. A scanning unit 228 is for reading a document placed on a document platen. A printing unit 229 prints print data with settings specified by a print job.

### Software Configuration

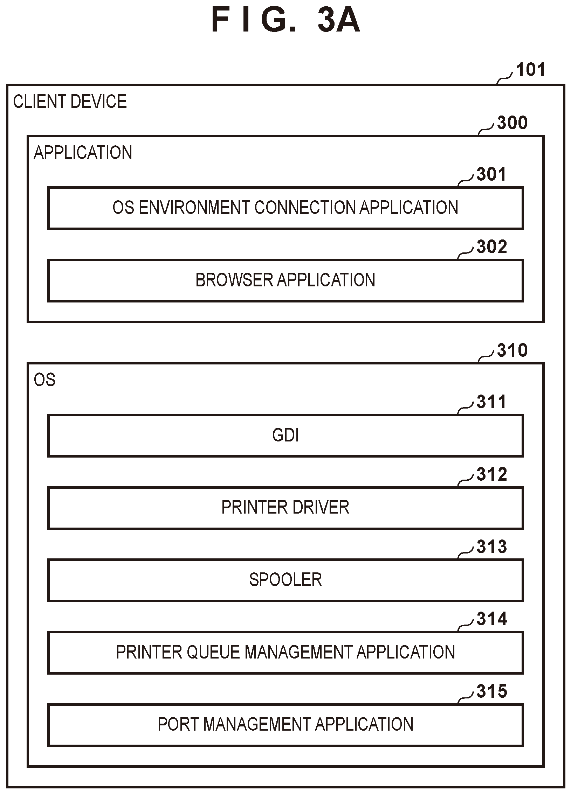

A software configuration example of the client device 101 will be described with reference to FIG. 3A. FIG. 3A focuses on modules related to the present embodiment, particularly modules related to printing. The client device 101 includes one or more applications 300 and an OS 310.

The one or more applications 300 may include any software such as, for example, an OS environment connection application 301, a browser application 302, security software, spreadsheet software, browser software, and the like.

The OS environment connection application 301 is client software for connecting to a server OS environment. For example, the OS environment connection application 301 displays a desktop screen of the OS environment received from the server device 103 on the display unit 204 of the client device 101. The OS environment connection application 301 transmits input from the user made to the desktop screen of the OS environment to the server device 103.

The browser application 302 is software for browsing web pages. The browser application 302 can access web pages stored in, for example, a web server (not shown) connected via the network 104 or a web server (not shown) connected via the Internet 105.

The OS 310 is software that governs the basic operation of the client device 101. The OS 310 includes a Graphical Device Interface (GDI) 311, a printer driver 312, a spooler 313, a printer queue management application 314, and a port management application 315. The printer driver 312 may be standardly included in the OS 310 or may be provided by a business operator that provides the MFP 102. The applications 300, the printer driver 312, and the like are managed by the OS 310 and become usable by being installed in the OS 310. Also, the printer driver 312 may be pre-built into the OS 310.

The GDI 311 is a component that provides an interface related to drawing such as printing to the outside. The printer driver 312 displays a User Interface (UI) for print settings for performing printing on the MFP 102. Also, the printer driver 312 generates drawing data (PDL: Page Description Language) that the MFP 102 can interpret at the time of printing. The spooler 313 transmits the PDL generated by the printer driver 312 toward the MFP 102. The printer queue management application 314 is an application that manages information regarding printer queues such as that of the MFP 102. Information regarding printer queues includes a printer name, printer capability information representing functional information available for the printer, and the like. Information regarding printer queues is saved in the storage unit 206. The port management application 315 is an application that manages whether or not a device such as the MFP 102 is connected to the communication port of the communication unit 207. The client device 101 can acquire printer capability information from the MFP 102 via the communication port.

The OS 310 is, for example, Windows from Microsoft Corporation. Instead of this, other OSs may be used. The print data that the printer driver 312 receives from the application 300 may be not only GDI format data but also eXtension Markup Language (XML) Paper Specification format data (XPS format data).

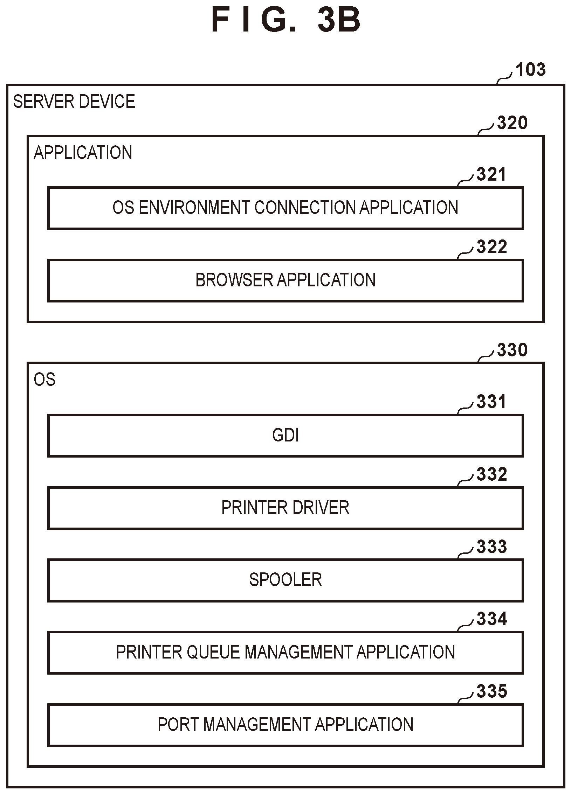

A software configuration example of the server device 103 will be described with reference to FIG. 3B. FIG. 3B focuses on modules related to the present embodiment, particularly modules related to printing. The server device 103 includes one or more applications 320 and an OS 330.

The one or more applications 320 may include any software such as, for example, an OS environment providing application 321, a browser application 322, and the like.

The OS environment providing application 321 is server software for providing an OS environment to a client. For example, the OS environment providing application 321 transmits a desktop screen of an OS environment to the client device 101. The OS environment providing application 321 receives input from the user made to the desktop screen displayed on the client device 101 from the client device 101. The OS environment provided by the OS environment providing application 321 may be the OS 330 of the server device 103. Alternatively, the OS environment provided by the OS environment providing application 321 may be a virtual OS environment created by an application 320 operating on the OS 330.

The browser application 322 is software for browsing web pages. The browser application 322 can access web pages stored in, for example, a web server connected via the Internet 105.

The OS 330 is software that governs the basic operation of the server device 103. The OS 330 includes a GDI 331, a printer driver 332, a spooler 333, a printer queue management application 334, and a port management application 335. Since descriptions of these components of the server device 103 are similar to the above descriptions of the components of the client device 101, redundant descriptions are omitted.

### Screen for Managing Printer Queue of Client Device

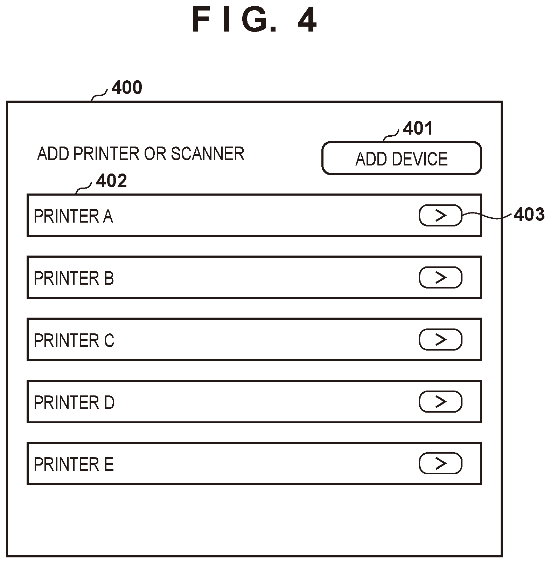

FIG. 4 shows an example of a UI screen 400 created by the printer queue management application 314 of the client device 101. The UI screen 400 is displayed on the display unit 204 of the client device 101. The printer queue management application 314 creates the UI screen 400 in response to an instruction from the user using the operation unit 205 of the client device 101, and displays it on the display unit 204.

The UI screen 400 includes an add button 401, a printer queue display area 402, and a detail display button 403. The printer queue display area 402 and the detail display button 403 are provided for each printer.

The add button 401 is a graphic object for acquiring from the user an instruction to search for devices (for example, the MFP 102) connected to the client device 101. In response to the add button 401 being pressed, the printer queue management application 314 searches for devices connected to the client device 101. The printer queue management application 314 searches for both devices connected to the client device 101 via a network and devices directly connected (for example, USB connected) to the client device 101. The printer queue management application 314 installs the printer queues of the discovered devices in the client device 101.

The printer queue display area 402 is a graphic object for displaying identification information of printer queues (for example, the printer queue of the MFP 102) installed in the client device 101. By checking the printer queue display area 402, the user can recognize printer queues installed in the client device 101.

The detail display button 403 is a graphic object for acquiring from the user an instruction to display details of a printer queue. In response to the detail display button 403 being pressed, the printer queue management application 314 displays details of the printer queue related to the detail display button 403 (for example, printer capability information).

### Screen for Connecting to OS Environment

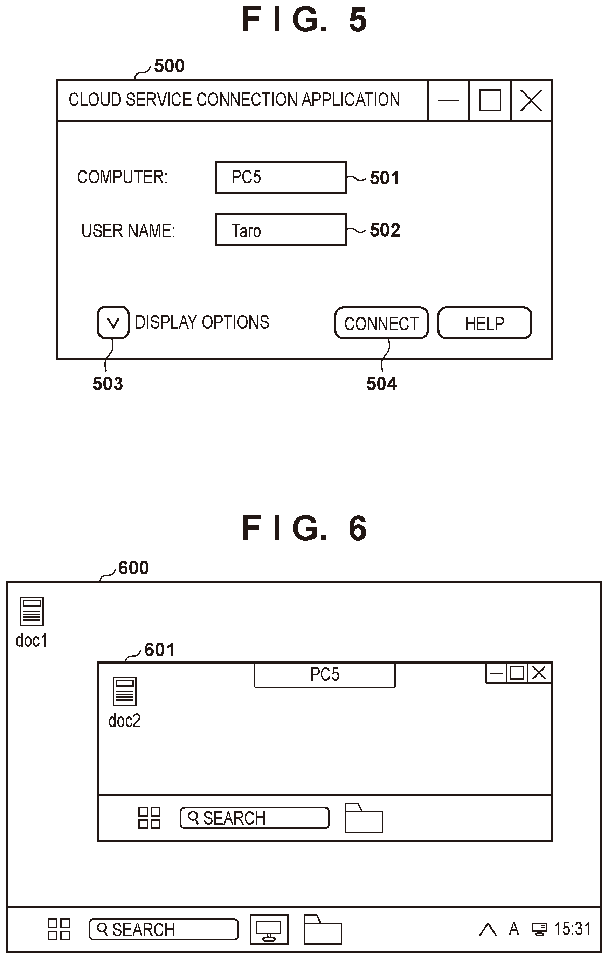

FIG. 5 shows an example of a UI screen 500 created by the OS environment connection application 301 of the client device 101. The UI screen 500 is displayed on the display unit 204 of the client device 101. The OS environment connection application 301 creates the UI screen 500 in response to an instruction from the user using the operation unit 205 of the client device 101 (for example, in response to an instruction to start the OS environment connection application 301), and displays it on the display unit 204.

The UI screen 500 includes a computer name input box 501, a user name input box 502, an option display button 503, and a connection button 504. The computer name input box 501 is a graphic object for acquiring from the user the name of a computer (for example, the server device 103) that provides the OS environment to which to connect. The user name input box 502 is a graphic object for acquiring from the user a user name to be used in the OS environment to which to connect.

The option display button 503 is a graphic object for acquiring from the user an instruction to display a screen for setting options (for example, security settings) when connecting to the OS environment. The connection button 504 is a graphic object for acquiring from the user an instruction to start processing for connecting to the OS environment. In response to the connection button 504 being pressed, the OS environment connection application 301 starts the connection processing to the OS environment using information input into the computer name input box 501 and the user name input box 502 (and detailed settings in some cases).

### Desktop Screen Including OS Environment

FIG. 6 shows an example of a client desktop screen 600 displayed on the display unit 204 of the client device 101 while the client device 101 is connected to the server OS environment. The client desktop screen 600 is a desktop screen generated by the OS 310 of the client device 101.

The client desktop screen 600 includes a server desktop screen 601. The server desktop screen 601 is a desktop screen of the server OS environment. The server desktop screen 601 is generated by the server device 103 and transmitted to the client device 101. The client device 101 displays the server desktop screen 601 received from the server device 103 on a part of the client desktop screen 600 being displayed on the display unit 204. The user of the client device 101 can operate the server OS environment using the operation unit 205 of the client device 101.

### Screen for Managing Printer Queue of Server OS Environment

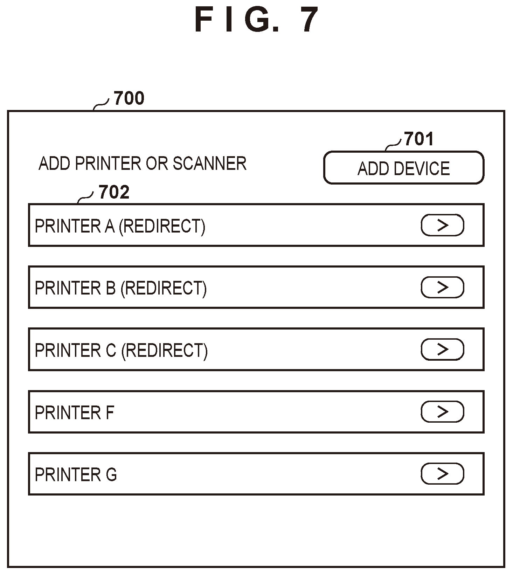

FIG. 7 shows an example of a UI screen 700 created by the server OS environment. When an environment including the OS 303 of the server device 103 is provided as the server OS environment, the UI screen 700 is created by the printer queue management application 314. The server OS environment creates the UI screen 700 in response to an instruction from the user using the operation unit 205 of the client device 101, and transmits it to the client device 101 by including it in the server desktop screen 601. The client device 101 displays the server desktop screen 601 including the UI screen 700 on the display unit 204.

The UI screen 700 includes an add button 701, a printer queue display area 702, and a detail display button 703. The printer queue display area 702 and the detail display button 703 are provided for each printer.

The add button 701 is a graphic object for acquiring from the user an instruction to search for devices connected to the server device 103. In response to the add button 701 being pressed, the printer queue management application 334 searches for devices connected to the server device 103. The printer queue management application 334 installs printer queues of discovered devices in the client device 101.

The printer queue display area 702 is a graphic object for displaying identification information of printer queues installed in the server OS environment. By checking the printer queue display area 702, the user can recognize printer queues installed in the server OS environment.

In the server OS environment, devices connected to the server device 103 and devices connected to the client device 101 (for example, the printer queue of the MFP 102) can be installed. The server OS environment can use printer queues of devices connected to the client device 101. Specifically, the server OS environment transmits such print jobs to devices via the client device 101.

Making a printer queue of a device connected to the client device 101 usable in the server OS environment is expressed as redirecting (transferring) the printer queue. For a printer queue of a device connected to the client device 101, a character string "(redirect)" is added in the printer queue display area 702. This allows the user to determine whether the printer queue is connected to the server device 103 or the client device 101. In the following description, a printer queue redirected from the client device 101 to the server OS environment may be referred to as a redirect queue.

The detail display button 703 is a graphic object for acquiring from the user an instruction to display details of a printer queue. In response to the detail display button 703 being pressed, the printer queue management application 334 displays details of the printer queue related to the detail display button 703 (for example, printer capability information).

### Method for Generating Printer Queue

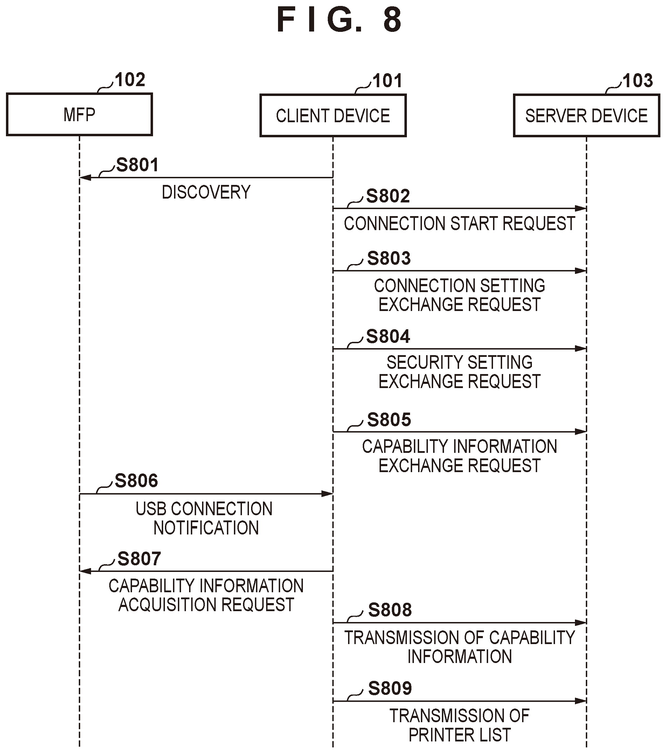

A method for creating a printer queue in the server OS environment will be described with reference to FIG. 8. Processing by each of the client device 101, the MFP 102, and the server device 103 may be performed by the CPU of each device executing a program read into the memory of each device. In FIG. 8 and sequence diagrams described later, arrows indicating responses to requests are omitted. The method of FIG. 8 is started, for example, in response to the connection button 504 of the UI screen 500 being pressed by the user.

In step S801, the client device 101 searches for (discovers) devices connected to the client device 101. A device connected to the client device 101 transmits its own information to the client device 101 in response to the search.

The search may be performed using a protocol such as Web Services On Devices (WSD) or Bonjour. In this search, both devices connected to the client device 101 via a network and devices directly connected (for example, USB connected) to the client device 101 are discovered. In the following description, it is assumed that the MFP 102 is not connected to the client device 101 at this point. Therefore, in step S801, the MFP 102 is not discovered.

In step S802, the client device 101 transmits a request to start processing for connecting to the server OS environment (connection start request) to the server device 103. The connection start request includes setting information necessary for connection (connection setting information). The connection setting information includes information such as authentication information for permitting access to the server device 103, and network settings representing information such as an Internet Protocol (IP) address and port number of the server device 103 of the connection destination.

In step S803, the client device 101 transmits a connection setting exchange request to the server device 103. In response to receiving this exchange request, the server device 103 transmits connection setting information to the client device 101. The connection setting information includes information such as authentication information showing that access from the client device 101 to the server device 103 is permitted, and network settings representing information such as an IP address and port number of the client device 101 of the connection source.

In step S804, the client device 101 transmits a security setting exchange request to the server device 103. This request includes information such as security settings which are setting information for using a secure communication protocol such as SSL/TLS.

In step S805, the client device 101 transmits a capability information exchange request to the server device 103. This request includes finisher information, printer function information, printer name information, etc., usable in the devices (for example, printers) searched in step S801. Based on the capability information received from the client device 101, the server device 103 registers printer queues of devices connected to the client device 101 in the printer queue management application 334. This makes printer queues of devices connected to the client device 101 usable in the server OS environment.

Through the processing of steps S801 to S805 above, the client device 101 is connected to the server OS environment, and the server desktop screen 601 is displayed on the client desktop screen 600 as shown in FIG. 6.

Assume that while connected to the server OS environment, the user connects the MFP 102 to a communication port for direct connection of the client device 101. In the following description, it is assumed that the user connects the MFP 102 to the client device 101 with a USB cable. In response to this, in step S806, the MFP 102 transmits a USB connection notification indicating that a USB has been connected to the client device 101. Thus, the client device 101 detects that the MFP 102 has been connected to a communication port for direct communication (for example, a USB port). Further, the MFP 102 transmits device identification information, device configuration information, authentication information, device status information, and the like to the client device 101.

In step S807, the client device 101 transmits a request for capability information of the MFP 102 (capability information acquisition request) to the MFP 102. In response to the capability information acquisition request, the MFP 102 transmits its own capability information (for example, capability information described in step S805) to the client device 101.

In step S808, the client device 101 transmits the capability information of the MFP 102 acquired in step S807 to the server device 103. The server device 103 stores the capability information of the MFP 102 received from the client device 101.

In step S809, the client device 101 transmits a printer list indicating a list of printer queues that can be redirected (transferred) to the server device 103. This printer list includes the printer queue of the MFP 102. The server device 103 registers printer queues included in the printer list received from the client device 101 in the printer queue management application 334. This makes the printer queue of the MFP 102 usable in the server OS environment. Since the capability information of the MFP 102 was acquired in step S808, the printer queue of the MFP 102 can also operate normally. Through the processing of steps S808 to S809, the printer queue of the MFP 102 is also included in the UI screen 700 included in the server desktop screen 601.

According to the above-described method, while connected to the server OS environment, the client device 101 transmits capability information of the MFP 102 to the server device 103 in response to the MFP 102 being connected to a communication port for direct communication (for example, to a USB port). This makes the printer queue of the MFP 102 usable in the server OS environment for the user. Transmitting capability information of the MFP 102 to the server device 103 is an example of processing for making the MFP 102 usable in the server OS environment.

### Printing Method Using Printer Queue

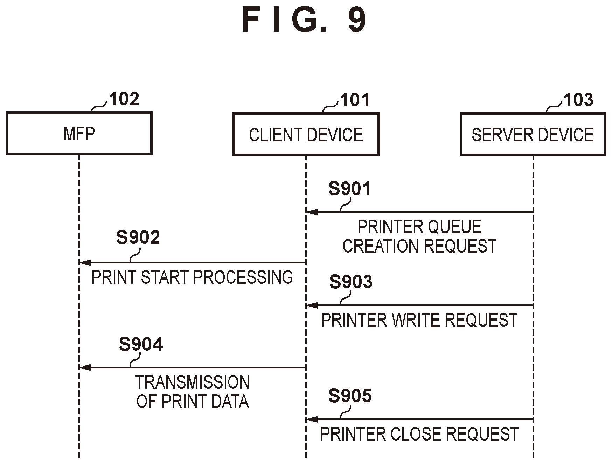

A method for executing printing using a printer queue in the server OS environment will be described with reference to FIG. 9. Processing by each of the client device 101, the MFP 102, and the server device 103 may be performed by the CPU of each device executing a program read into the memory of each device. The method of FIG. 9 is started in response to an instruction from the user for the server desktop screen 601.

In step S901, in response to a specific printer queue among printer queues displayed on the UI screen 700 being selected by the user, the server device 103 transmits a printer queue creation request corresponding to the printer list acquired in step S809 to the client device 101.

In step S902, the client device 101 transmits print start processing to the MFP 102. The print start processing includes a connection start request from the client device 101 to the MFP 102 and connection setting exchange processing.

In step S903, the server device 103 transmits print data saved in the storage unit 216 of the server device 103 to the client device 101.

In step S904, the client device 101 transmits the print data received from the server device 103 to the MFP 102.

In step S905, the server device 103 notifies the client device 101 of completion of transmission of print data and transmits a printer close request indicating a request to end the connection with the MFP 102 to the client device 101.

As described above, when the MFP 102 is USB-connected to the client device 101 by the user while the client device 101 is connected to the server OS environment, the client device 101 acquires device information of the MFP 102 and transmits it to the server device 103. Based on information such as the device information acquired from the client device 101, the server device 103 displays printer queue information redirected to the server device 103. By executing printing with that redirect queue, the user can transmit a print instruction from the server device 103 to the MFP 102.

### <Second Embodiment>

A printing system 100 according to a second embodiment will be described. Redundant descriptions of points that may be similar to the first embodiment are omitted. In the first embodiment, in step S808, the client device 101 transmits capability information of the MFP 102 to the server device 103, whereby the MFP 102 becomes usable in the server OS environment. However, depending on the server device 103, there is a possibility that capability information of the MFP 102 transmitted while the client device 101 is connected to the server OS environment is not accepted, and capability information is accepted only at the start of connection. Therefore, the printing system 100 according to the second embodiment prompts the user to execute the connection processing again.

### Method for Generating Printer Queue

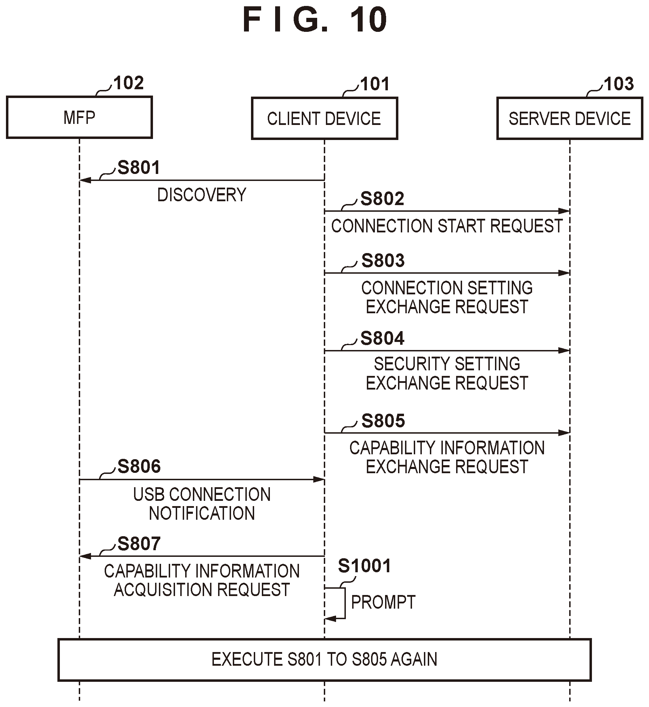

A method for creating a printer queue in the server OS environment will be described with reference to FIG. 10. Processing by each of the client device 101, the MFP 102, and the server device 103 may be performed by the CPU of each device executing a program read into the memory of each device.

Since steps S801 to S807 of FIG. 10 may be similar to steps S801 to S807 of FIG. 8, redundant descriptions are omitted. In step S1001, the client device 101 prompts the user to make the USB-connected MFP 102 usable in the server OS environment. This processing is an example of processing for making the MFP 102 usable in the server OS environment.

For example, the client device 101 may notify the user that the MFP 102 is not usable in the server OS environment. A knowledgeable user will understand that to make the MFP 102 usable in the server OS environment, it is sufficient to reconnect to the server OS environment while the MFP 102 is connected to the client device 101.

In addition to or instead of the notification above, the client device 101 may present to the user a procedure for making the MFP 102 usable in the server OS environment. Specifically, in order to make the MFP 102 usable in the server OS environment, the client device 101 may present to the user a suggestion to reconnect to the server OS environment after disconnecting from the server OS environment.

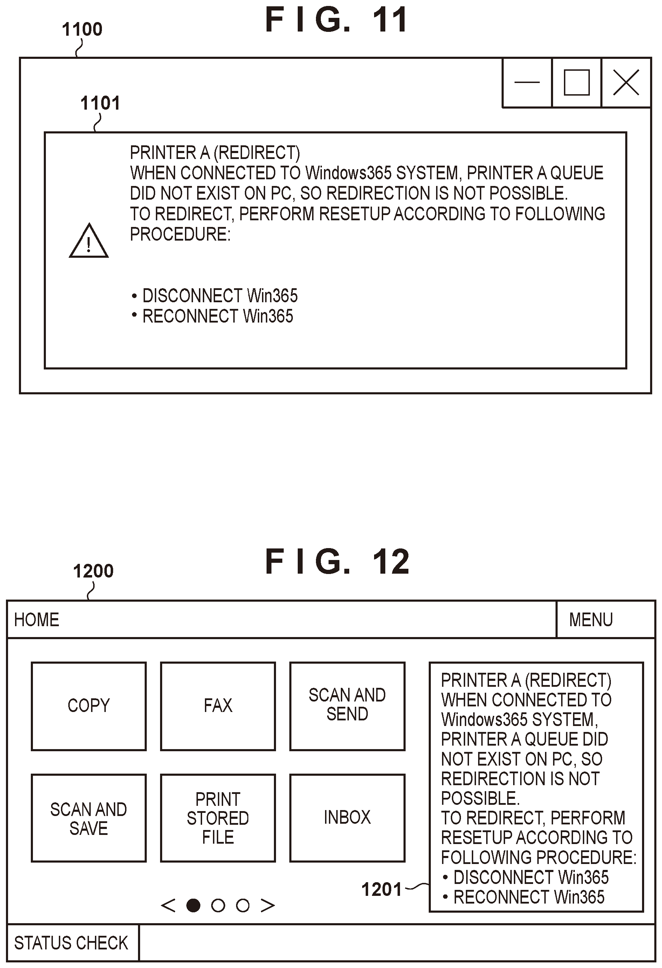

FIG. 11 shows an example of a UI screen 1100 for prompting the user to make the MFP 102 usable in the server OS environment. The client device 101 displays the UI screen 1100 on the client desktop screen 600. The UI screen 1100 includes a message display area 1101. The message display area 1101 includes a notification that the MFP 102 is not usable in the server OS environment and a procedure for making the MFP 102 usable in the server OS environment.

Prompting the user to make the USB-connected MFP 102 usable in the server OS environment may be performed at the MFP 102. FIG. 12 shows an example of a UI screen 1200 for prompting the user to make the MFP 102 usable in the server OS environment. The client device 101 instructs the MFP 102 to display the UI screen 1200. The MFP 102 displays the UI screen 1200 on the display unit 224 in accordance with the instruction from the client device 101. The UI screen 1200 includes a message display area 1201. The message display area 1201 includes a notification that the MFP 102 is not usable in the server OS environment and a procedure for making the MFP 102 usable in the server OS environment.

Thereafter, in response to an instruction from the user to the client device 101 to reconnect to the server OS environment, the client device 101 executes steps S801 to S805 again. Since the MFP 102 is connected to the client device 101 at this point, the MFP 102 becomes usable in the server OS environment. Specifically, the printer queue of the MFP 102 becomes usable in the server OS environment.

### <Third Embodiment>

A printing system 100 according to a third embodiment will be described. Redundant descriptions of points that may be similar to the first embodiment are omitted. In the third embodiment, operations of the printing system 100 in a case where connection of the MFP 102 to the client device 101 is released will be described. The MFP 102 may be connected to the client device 101 via a network or may be directly connected (for example, USB-connected). Release of connection can occur due to, for example, a network failure, unplugging of a cable by a user, shutdown of the MFP 102, or the like.

### Method for Generating Printer Queue

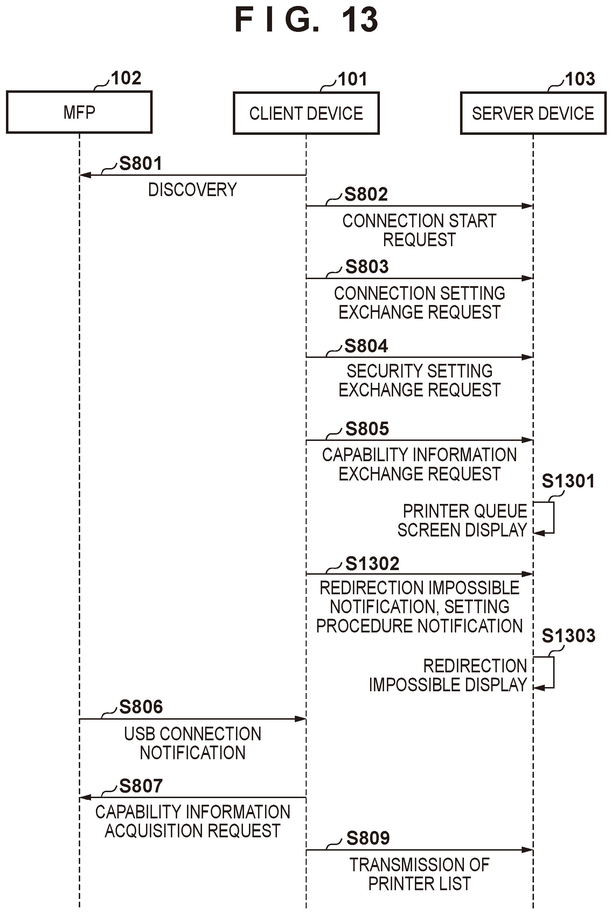

A method for creating a printer queue in the server OS environment will be described with reference to FIG. 13. Processing by each of the client device 101, the MFP 102, and the server device 103 may be performed by the CPU of each device executing a program read into the memory of each device.

Since steps S801 to S805 of FIG. 13 may be similar to steps S801 to S805 of FIG. 8, redundant descriptions are omitted. However, it is assumed that the MFP 102 is discovered in step S801 and the MFP 102 is usable in the server OS environment at the time of completion of step S805.

In step S1301, the server device 103 generates the UI screen 700 and transmits it to the client device 101 by including it in the server desktop screen 601. The client device 101 displays the server desktop screen 601 including the UI screen 700 on the display unit 204.

Thereafter, assume that the connection of the MFP 102 to the client device 101 is released. Thereby, the MFP 102 becomes an MFP that was connected to the client device 101 in the past. In step S1302, in response to becoming no longer connected to the MFP 102, the client device 101 transmits a notification that the MFP 102 is not connected to the client device 101 to the server device 103. This notification may include error information, cause information, and countermeasure information. The error information is information indicating that the printer queue of the MFP 102 cannot be redirected to the cloud server. The cause information is information indicating that the MFP 102 is not connected to the network 104. The countermeasure information is information with content for notifying the user to connect the MFP 102 to the client device 101 via USB.

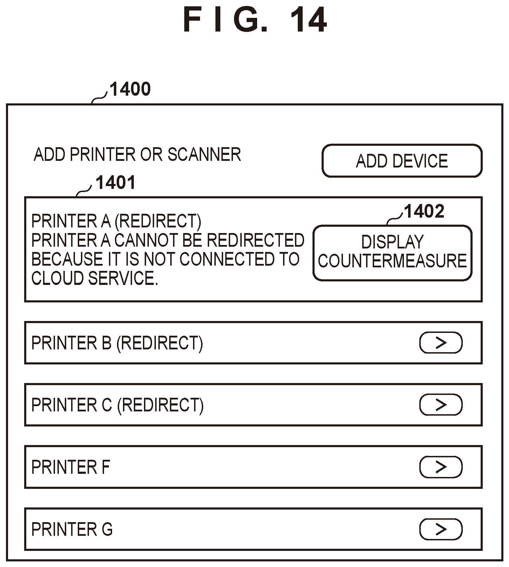

In step S1303, based on the notification received in step S1302, the server device 103 updates the UI screen 700 displayed on the display unit 204 of the client device 101 to a UI screen 1400 of FIG. 14. The UI screen 1400 includes a printer queue display area 1401 and a countermeasure display button 1402.

The printer queue display area 1401 is a graphic object for displaying identification information of a printer queue that has become unusable in the server OS environment. By checking the printer queue display area 1401, the user can recognize printer queues that have become unusable in the server OS environment.

In the printer queue display area 1401, a message for notifying the user that the MFP 102 is not usable in the server OS environment is displayed. Specifically, a message indicating that the printer queue of the MFP 102 cannot be redirected (transferred) to the server device 103 and the cause thereof are displayed. Thereby, the user can recognize that the printer queue of the MFP 102 cannot be redirected to the server device 103, and it becomes easy to identify the cause of being unable to redirect.

The countermeasure display button 1402 is a graphic object for acquiring from the user an instruction to display a countermeasure for making the MFP 102 usable. In response to the countermeasure display button 1402 being pressed, the printer queue management application 334 displays a countermeasure for making the MFP 102 usable. For example, the countermeasure may include a procedure for making the MFP 102 usable in the server OS environment. The countermeasure may include detailed information such as status information of each system.

As described above, by displaying the UI screen 1400 on the display unit 204 of the client device 101, the server device 103 prompts the user to make the MFP 102 usable in the server OS environment.

In the example described above, the notification to the user (at least one of the fact that the MFP 102 cannot be used and the countermeasure therefor) is included in the printer queue display area 1001. Instead of this, this notification may be included in an error notification area of the server desktop screen 601, or may be included in an error notification area or another area of the client desktop screen 600.

In the example described above, step S1302 is executed in response to detection of connection release of the MFP 102 to the client device 101. Instead of this, step S1302 may be executed in connection start processing to the server OS environment. For example, in connection start processing to the server OS environment, the client device 101 may determine whether it can communicate with devices configuring printer queues installed therein. If there is a device with which communication is not possible, the client device 101 may execute step S1302 for this device.

According to the present embodiment, error information, cause information, and countermeasure information related to the fact that the MFP 102 cannot be used in the server OS environment (the printer queue cannot be redirected) are presented to the user. Thereby, the user can recognize information regarding whether the current printer queue can be redirected, and taking measures becomes easy.

### <Fourth Embodiment>

A printing system 100 according to a fourth embodiment will be described. Redundant descriptions of points that may be similar to the first embodiment are omitted. The printing system 100 according to the fourth embodiment provides a UI for acquiring from a user an instruction to redirect a printer queue of the client device 101 to the server OS environment. This allows the user to redirect printer queues even outside of connection start processing to the server OS environment.

### Method for Generating Printer Queue

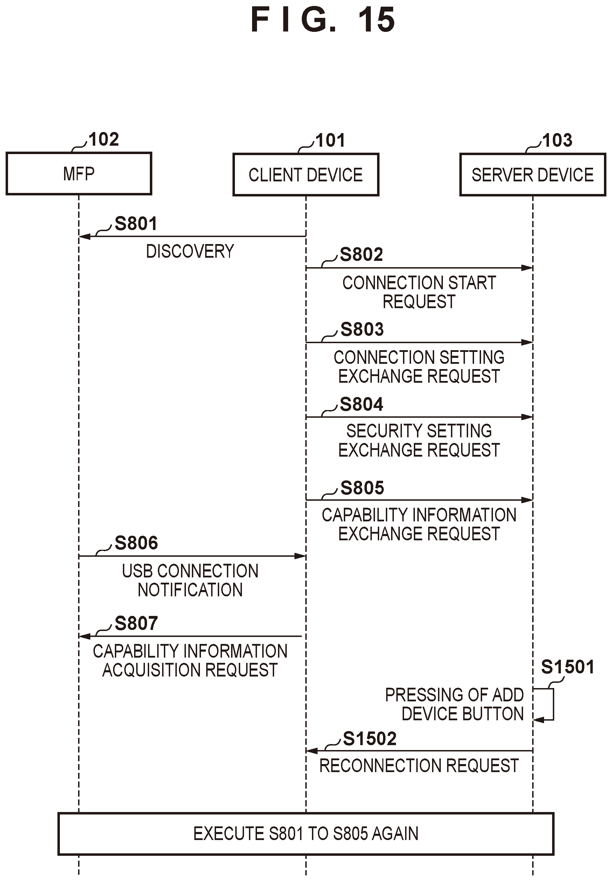

A method for creating a printer queue in the server OS environment will be described with reference to FIG. 15. Processing by each of the client device 101, the MFP 102, and the server device 103 may be performed by the CPU of each device executing a program read into the memory of each device.

Since steps S801 to S807 of FIG. 15 may be similar to steps S801 to S807 of FIG. 8, redundant descriptions are omitted. In step S1501, the server device 103 detects that the add button 701 of the UI screen 700 has been pressed by the user. Pressing of the add button 701 is performed in the server OS environment (specifically, on the server desktop screen 601 of the server OS environment). In response to this, the server device 103 searches for MFPs connected to the server device 103.

Further, in step S1502, the server device 103 requests the client device 101 to reconnect to the server OS environment. In response to this request, the client device 101 executes steps S801 to S805 again. Since the MFP 102 is connected to the client device 101 at this point, the MFP 102 becomes usable in the server OS environment. Specifically, the printer queue of the MFP 102 becomes usable in the server OS environment.

### <Fifth Embodiment>

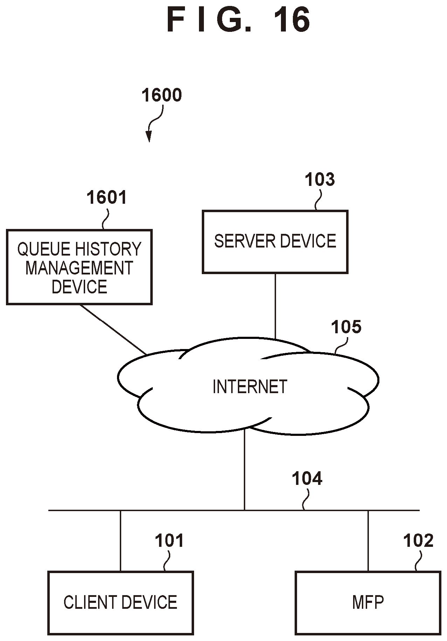

A printing system 1600 according to a fifth embodiment will be described. Redundant descriptions of points that may be similar to the first embodiment are omitted. The printing system 1600 further includes a queue history management device 1601. In FIG. 16, the queue history management device 1601 is shown as a device separate from other components. Instead of this, functions of the queue history management device 1601 may be incorporated into another device, such as the server device 103.

The queue history management device 1601 stores history information of printer queues redirected in the past to the server device 103 by an MFP (for example, MFP 102) connected to the client device 101. The server device 103 refers to this history information to determine whether there exists an MFP that was usable in the server OS environment in the past but has become unusable at the time of execution of connection start processing by the client device 101. Such an MFP is an MFP that was connected to the client device 101 in the past. If such an MFP exists, the server device 103 prompts the user to make this MFP usable in the server OS environment.

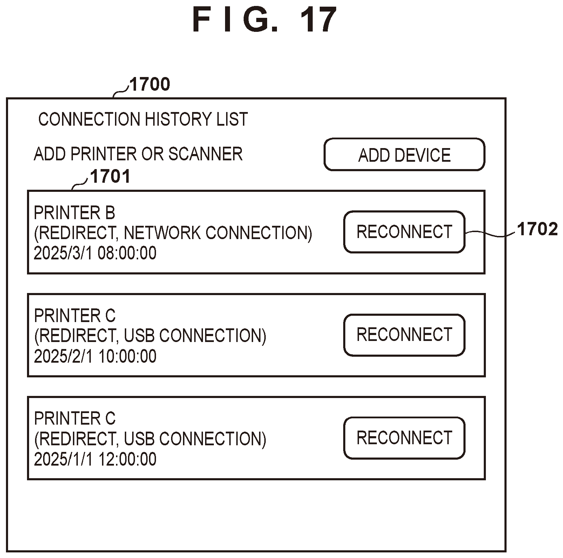

FIG. 17 shows an example of a UI screen 1700 created by the server device 103. The UI screen 1700 is created by the printer queue management application 314. The server device 103 creates the UI screen 1700 during connection start processing to the server OS environment by the client device 101, and transmits it to the client device 101. The client device 101 displays the UI screen 1700 on the display unit 204.

The UI screen 1700 includes a printer queue display area 1701 and a reconnect button 1702. The printer queue display area 1701 and the reconnect button 1702 are provided for each printer.

The printer queue display area 1701 is a graphic object for displaying identification information of printer queues installed in the server OS environment. In the printer queue display area 1701, when the printer queue is a redirect queue from the client device 101, "redirect" is displayed after the printer name. Also, a past connection form between the MFP 102 and the client device 101 is displayed (for example, "network connection" or "USB connection"). Further, the printer queue display area 1701 displays the date and time when the printer queue was redirected to the server device 103 in the past, such as "2025/3/1 08:00:00".

Information displayed in the printer queue display area 1701 is managed by the queue history management device 1601. Specifically, in response to a printer queue being redirected from the client device 101, the server device 103 transmits information related to this redirection to the queue history management device 1601. Also, when creating the UI screen 1700, the server device 103 acquires history information from the queue history management device 1601.

The reconnect button 1702 is an object for acquiring from the user an instruction to reconnect to a printer queue. In response to the reconnect button 1702 being pressed, the server device 103 re-searches for printer queues redirected in the past. When information of a printer targeted for search matches information of a printer connected to the client device 101, the server device 103 re-acquires the redirect queue of this printer. Thereby, the server device 103 can easily reconnect with a printer having a track record of redirect connection in the past.

### Method for Generating Printer Queue

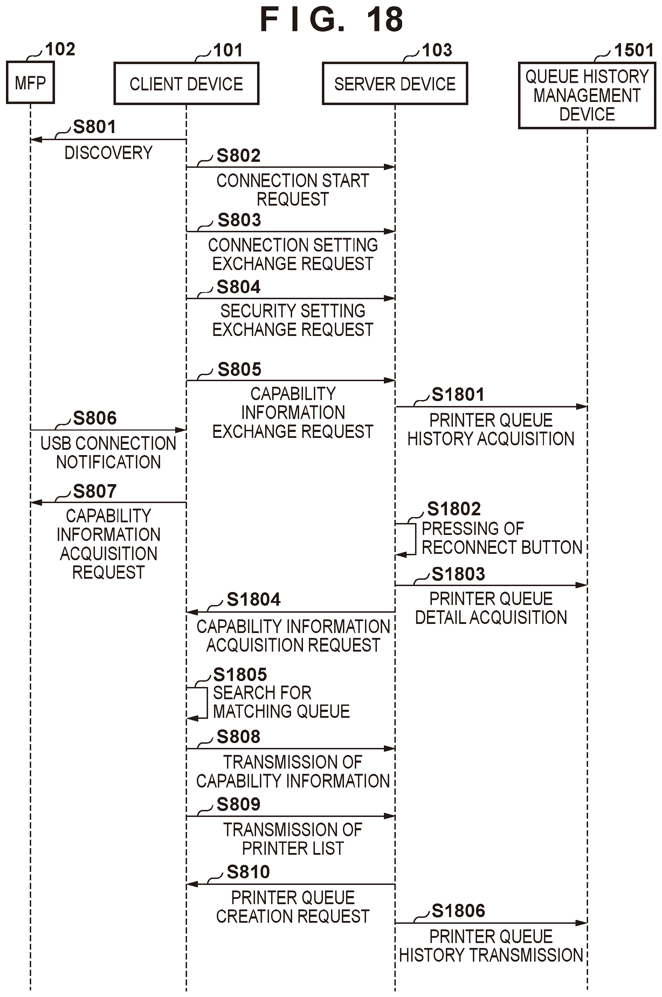

A method for creating a printer queue in the server OS environment will be described with reference to FIG. 18. Processing by each of the client device 101, the MFP 102, and the server device 103 may be performed by the CPU of each device executing a program read into the memory of each device.

Since steps S801 to S807 of FIG. 18 may be similar to steps S801 to S807 of FIG. 8, redundant descriptions are omitted. During processing of starting connection to the server OS environment, in step S1801, the server device 103 acquires queue history information from the queue history management device 1601. The server device 103 generates the UI screen 1700 based on the acquired information and causes the client device 101 to display it.

In step S1802, the server device 103 detects that the reconnect button 1702 has been pressed by the user. In step S1803, the server device 103 acquires details of history information of the printer queue corresponding to the reconnect button 1702 from the queue history management device 1601. These details of history information include information for uniquely identifying the printer queue (for example, device identification information) and the like. This allows the server device 103 to uniquely identify the printer queue.

In step S1804, together with the information acquired in step S1803, the server device 103 transmits a capability information acquisition request to the client device 101. In step S1805, the client device 101 searches the storage unit 206 for queue information matching the queue information acquired in step S1804, and identifies a matching queue. Thereafter, steps S808 to S810 of FIG. 8 are executed. In step S1806, the server device 103 transmits information of the redirected printer queue to the queue history management device 1601.

According to the present embodiment, the server device 103 acquires history information of past printer queues and attempts to reconnect to a printer queue. This allows the user to easily reconnect to a printer queue used in the past.

### <Other Embodiments>

As print setting data saved in the storage unit 216 of the server device 103, data formats to be transmitted and received, such as PrintTicket and devmode, may differ due to differences in the OS 310 or printer driver 312. The present disclosure is applicable even in transmission and reception of such diverse data formats.

Furthermore, in the above embodiments, it is assumed that the printer driver 312 transmits a print job to the MFP 102 connected to the client device 101 via the network 104 or directly. However, the present disclosure is not limited to this. For example, the printer driver 312 may upload a print job to a print service on a cloud or the like, and print with a printer connected to a network different from that of the client device 101 via the cloud.

Also, in the above embodiments, it was explained that information regarding printer queues is mainly displayed on the client device 101 or the server device 103. However, the present disclosure is not limited to this, and for example, information regarding printer queues may be UI-displayed on the display unit 224 on the MFP 102.

Also, in the above embodiments, a mechanism for connecting to a cloud service such as Windows 365 was explained. However, the present disclosure is not limited to this, and for example, a mechanism for remote connection such as remote desktop connection provided in a Windows computer may be used.

Also, in the above embodiments, the MFP 102 was given as an example of an image forming apparatus and explained. However, the present disclosure is not limited to this, and may be a printer having only a printing function called an SFP (Single Function Printer), or a device such as a scanner. The term usable may be considered to mean operatable, utilizable, functional or similar wording in the sense that the image forming apparatus is capable of being used/operated/utilized through the OS environment provided by the server. Put another way, the image forming apparatus is capable of functioning (i.e. capable of performing its intended function(s)) while using the OS environment provided by the server.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{TM}), a flash memory device, a memory card, and the like.

Various embodiments have been described in detail above but it will be understood that the present disclosure is not solely limited to these embodiments and encompasses all modifications, variants, alternatives and equivalents falling within the scope of the appended claims.

## Claims

1. A client device (101) comprising:
connecting means configured to connect the client device to an operating system, OS, environment provided by a server (103);
detecting means (207) configured to detect that an image forming apparatus (102) has been connected to a communication port (207) for direct communication of the client device; and
processing means (201) configured to, in response to an image forming apparatus being connected to the communication port while the client device is connected to the OS environment provided by the server, perform processing to make the image forming apparatus usable in the OS environment.

2. The client device according to claim 1, wherein the processing for making the image forming apparatus connected to the communication port usable in the OS environment includes transmitting information of the image forming apparatus to the server.

3. The client device according to claim 1 or 2, wherein the processing to make the image forming apparatus usable in the OS environment includes prompting a user to make the image forming apparatus usable in the OS environment.

4. The client device according to claim 3, wherein prompting the user to make the image forming apparatus usable in the OS environment includes at least one of:
notifying the user that the image forming apparatus is not usable in the OS environment; and
presenting to the user a procedure to make the image forming apparatus usable in the OS environment.

5. A method for controlling a client device (101), the method comprising:
Connecting the client device to an operating system, OS, environment provided by a server (103);
detecting that an image forming apparatus (102) has been connected to a communication port for direct communication of the client device; and
in response to an image forming apparatus being connected to the communication port while the client device is connected to the OS environment provided by the server, performing processing to make the image forming apparatus usable in the OS environment.

6. A computer program comprising instructions which, when the program is executed by a computer, cause the computer to carry out the method of claim 6.
